# EUROPÄISCHE PATENTSCHRIFT

(11) **EP 2 919 879 B1**
(45) Veröffentlichungstag und Bekanntmachung des Hinweises auf die Patenterteilung: **26.02.2020**
(21) Anmeldenummer: 12812534.1
(22) Anmeldetag: 24.12.2012
(51) Int. Cl.: B01D 29/21

(54) **FILTERELEMENT**
FILTER ELEMENT
ÉLÉMENT FILTRANT

(30) Priorität: 14.11.2012 DE 102012022283; 14.11.2012 DE 102012022285
(43) Veröffentlichungstag der Anmeldung: 23.09.2015
(73) Patentinhaber: RT-Filtertechnik Gmbh, 88048 Friedrichshafen (DE)
(72) Erfinder: OBERLI, Frank, CH-8193 Eglisau (CH); SCHÖNFELD, Dirk, 99510 Schwabsdorf (DE)
(74) Vertreter: Bartels und Partner, Patentanwälte
(86) Internationale Anmeldenummer: PCT/EP2012/005376
(87) Internationale Veröffentlichungsnummer: WO 2014/075703

(56) Entgegenhaltungen:
- EP-A1- 0 504 038
- EP-A1- 1 757 355
- EP-B1- 1 322 396
- WO-A1-01/37969
- WO-A1-2004/041407
- WO-A1-2010/111411
- FR-A1- 2 791 579

## Beschreibung

Die Erfindung betrifft ein Filterelement mit den Merkmalen im Oberbegriff von Anspruch 1.

Filterelemente dieser Art sind handelsüblich. In Verbindung mit Fluidanlagen verschiedenster Art finden solche Filterelemente verbreitet Anwendung für die Filterung von Verfahrensflüssigkeiten, Druckflüssigkeiten, wie Hydraulikölen, sowie flüssigen Kraft- und Schmierstoffen zur Aufbereitung flüssiger Medien und dergleichen.

In vielen Fällen steht bei Fluidanlagen, bei denen die Filterelemente zum Einsatz kommen, nur ein begrenzter Nutzraum für den Ein- oder Ausbau der Anlagenteile zur Verfügung, die die betreffenden filterkerzenartigen Filterelemente enthalten. Andererseits ist, um entsprechend große Fluidströme filtrieren zu können, eine ausreichende Größe der von dem Filterelement zur Verfügung gestellten Filterfläche erforderlich.

Zur Bereitstellung einer ausreichend großen Filterfläche weisen die bekannten Filterelemente, die auf dem Markt frei erhältlich sind, ein typischerweise aus mehreren Lagen verschiedener Filtermaterialen zusammengesetztes, zickzack-förmig gefaltetes oder plissiertes Filtermedium auf. Bei der Fertigung wird das Filtermedium durch eine Schneideeinrichtung hindurch geführt, in welcher das Filtermedium randseitig auf Maß zugeschnitten wird, bevor es zu einer Faltmaschine weiterbewegt wird, in der die Zick-Zack-Form oder das Plissee bestehend aus einer Vielzahl an einzelnen Filterfalten ausgebildet wird. Im weiteren Verlauf der Fertigung wird das zugeschnittene Filtermedium in Abschnitte aufgetrennt, welche zu einem Rohrkörper geformt werden und insoweit das Filterelement bilden.

Bei den vorstehend beschriebenen Standard-Filterelementlösungen haben alle Filterfalten regelmäßig die gleiche Einsatzhöhe, was in Abhängigkeit der Durchströmungsverhältnisse dazu führen kann, dass aufgrund ihrer Flexibilität oder Nachgiebigkeit mehrere benachbart zueinander angeordnete Filterfalten aufeinander zu verschoben werden und somit entlang ihrer wirksamen Filterfläche unmittelbar in Anlage miteinander kommen, was zu einer Art "Verblocken" des Elementmaterials in diesem zusammenhängenden Bereich führt, da das zu filtrierende Medium dann nicht mehr ungestört alle Filterfalten des Elementverbundes erreichen kann. Dies hat wiederum zur Folge, dass die verbleibenden Filterfalten, die sich voneinander wegspreizen und nicht verblockt sind, vermehrt von dem von Partikelverschmutzung abzureinigenden Fluid durchströmt werden mit der Folge, dass insoweit die Strömungsgeschwindigkeit ansteigt und die Flächenbelastung auf diese Falten des Filtermediums erhöht ist. Da das mehrlagige Filtermedium regelmäßig aus einzelnen Filtervliesen bestehend aus Einzelfasern gebildet ist, führt dies zu einem erhöhten Austrag an Fasermaterial aus dem Vlies-Verbundwerkstoff (Migration), was wiederum die Standzeit für das Filterelement erniedrigt.

Eine große Herausforderung, der sich die Filtrationstechnik in jüngster Zeit stellen muss, ist die Tatsache, dass die vorrangig mit solchen Filterelementen abzureinigenden Hydraulikflüssigkeiten aufgrund von Umweltschutzvorgaben keine metallischen Additive, insbesondere keine umweltschädigenden Zinkzusätze mehr aufweisen dürfen, wodurch jedoch die elektrische Leitfähigkeit der Hydraulikflüssigkeit herabgesetzt ist. Aufgrund dieser herabgesetzten Leitfähigkeit können elektrostatische Aufladungen, wie sie regelmäßig beim Durchströmen des Filtermediums auftreten, über die Hydraulikflüssigkeit nicht mehr, wie in der Vergangenheit, wirksam abgeleitet werden mit der Folge, dass es zu Entladungsvorgängen im Filterelement kommen kann, die auch in der Art von Entladungsblitzen auftreten können, die regelmäßig das empfindliche Filtermedium ebenso zerstören, wie sie die Ölalterung der Hydraulikflüssigkeit(en) begünstigen. Insbesondere bei sogenannten Intank-Anwendungen des Filterelementes, bei dem dieses in geschlossenen Tankeinheiten zum Einsatz kommt, können solche Entladungsblitze die Explosionsgefahr erhöhen.

Um diesen Effekten zu begegnen, ist im Stand der Technik (DE 10 2004 005 202 A1) bereits vorgeschlagen worden, bei einem Filterefement mit einem Filtermedium, das sich zwischen zwei Endkappen erstreckt, die jeweils mit einem zuordenbaren Endbereich des Filtermediums verbunden sind, und das sich zumindest an einer Seite an einem Stützrohr abstützt, vorzusehen, dass mindestens eine der Endkappen und/oder zumindest ein Endbereich des Filtermediums eine Kontaktierungseinrichtung aufweist und/oder die jeweilige Endkappe selbst oder Teile von ihr ableitend ausgebildet sind, um dergestalt ein Ableiten der im Betrieb des Filterelementes regelmäßig auftretenden, elektrostatischen Aufladungen sicherzustellen. Die durch die vorstehend beschriebenen tribologischen Effekte am Filtermedium generierte Ladung kann so über die Kontaktierungseinrichtung und/oder die jeweilige Endkappe an einen Massepunkt oder eine Massestelle abfließen. Die dahingehend "geordnete Ableitung" hat sich als sehr wirksam erwiesen; jedoch ist für den Erhalt der vorgestellten Kontaktierungseinrichtung ein erhöhter Material- und Fertigungsaufwand nötig, was sich in den Herstellkosten des Elementes entsprechend nachteilig niederschlägt.

Ein alternativer Lösungsansatz wurde in der WO 2009/089891 A1 beschrieben, die eine Filterelementlösung ohne Einsatz einer Kontaktierungseinrichtung aufzeigt. Bei dieser bekannten Lösung wird für das Filtermedium ein Herstellmaterial ausgewählt, dessen Potentialunterschied zu dem zu reinigenden Fluid in Abhängigkeit der jeweils gewählten Abreinigungsaufgabe gering ist. Insbesondere sind hier Filterlösungen angesprochen, bei denen Teile des Filtermediums zueinander und/oder zu dem zu reinigenden Fluid (Hydraulikflüssigkeit) derart unterschiedliche Potentiale aufweisen, dass diese sich gegenseitig im Filtrationsbetrieb zumindest teilweise aufheben, oder bei denen eine gezielte Ableitung zurück in die Hydraulikflüssigkeit angestrebt wird oder bei denen eine Rückgabe elektrischer Ladung unter Einsatz einer Ladungsausgleichsfage im Filtermedienverbund an das Gesamt-Filtermedium vorgesehen ist. Mit dieser bekannten Lösung ist es also möglich, gemäß einer bekannten elektrischen Spannungsreihe für verschiedene für das Filtermedium vorgesehene Filtermaterialien (Filtervliese) das Potential abzuschätzen, das sich im üblichen Einsatzfall zwischen zwei wechselwirkenden Komponenten, also zwischen Öl und Filtermedium, ergibt. Bei der dahingehend bekannten, sehr vorteilhaften Lösung wird grundsätzlich sehr wenig Aufladung generiert, so dass erst gar nicht das Problem auftritt, diese an einem Massepunkt, wie vorstehend beschrieben aufgezeigt, über eine eigenständige Kontaktierungseinrichtung ableiten zu müssen. Dennoch hat sich auch hier gezeigt, dass man bei der Auswahl der in Rede stehenden Filtereinsatzmaterialien, ausgehend von der angesprochenen tribologischen Spannungsreihe, einen entsprechend hohen Aufwand sowohl von der Vorentwicklungsseite als auch von der Materialeintragsseite her treiben muss, um zu guten Resultaten zu gelangen, was wiederum die Herstellkosten für das Filterelement erhöht.

Auch ist allen vorstehend beschriebenen bekannten Lösungen gemeinsam, dass es durch Verschieben von freien Filterfaltenenden aufgrund der Fluiddurchströmung zu dem nachteiligen Effekt des "Verblockens" kommen kann.

Die WO 2010/111411 A1, WO 2004/041407 A1, EP 0 504 038 A1 und EP1757355 A1 beschreiben jeweils ein Filterelement mit einem, vorzugsweise mehrlagigen, Aufbau eines plissierten Filtermediums mit einer Vielzahl von einzelnen Filterfalten, wobei durch eine alternierende Reihenfolge von Filterfalten mit einer ersten Faltenhöhe und von Filterfalten mit einer zweiten Faltenhöhe mehr wirksame Filterfläche zur Verfügung steht als bei Filterfalten mit einheitlicher Faltenhöhe.

Durch EP 1 322 396 B1 ist ein Filter bekannt, der aufweist: Ein zylindrisches Filterelement mit einer Längsachse, einem äußeren Umfang und einem inneren Umfang, der mehrere gekurvte Längsfalten aufweist, die nah zueinander angeordnet sind, so dass benachbarte Faltenflächen miteinander in Stützkontakt stehen, wobei jede der Falten ein Paar Schenkel aufweist, wobei die Schenkel jeder Falte an einer Wurzel miteinander verbunden sind, und wobei die Wurzeln von benachbarten Falten in gleichmäßigen Abständen um den inneren Umfang des Filterelements radial voneinander beabstandet sind. Mithin ist ein Filterelement mit einer Vielzahl von einzelnen Filterfalten bekannt, wobei durch eine alternierende Reihenfolge von Filterfalten mit einer ersten Faltenhöhe und von Filterfalten mit einer zweiten Faltenhöhe mehr wirksame Filterfläche zur Verfügung steht, als bei Filterfalten mit einheitlicher Faltenhöhe. Dabei beträgt bei einer Ausführungsform der bekannten Lösung die zweite Faltenhöhe 50 bis 95 %, z.B. 92 %, der ersten Faltenhöhe.

Vor diesem Hintergrund ist es die Aufgabe der Erfindung, ein Filterelement aufzuzeigen, bei dem bei einer kostengünstigen und funktionssicheren Bauweise die Gefahr einer ungewollten elektrostatischen Entladung minimiert ist.

Diese Aufgabe wird durch ein Filterelement mit den Merkmalen von Anspruch 1 gelöst. Vorteilhafte Ausführungsformen und Weiterbildungen der Erfindung sind Gegenstände der Unteransprüche.

Erfindungsgemäß ist gemäß dem kennzeichnenden Teil des Patentanspruches 1 vorgesehen, dass die geraden Abschnitte der Filterfalten jeweils in einer Ebene verlaufen, in der auch eine Mittellängsachse des Filtermediums liegt und dass die zweite Faltenhöhe 85 % bis 95 %, vorzugsweise 90 %, der ersten Faltenhöhe beträgt. Durch diese Anordnung ergibt sich eine besonders hohe Packungsdichte des Filtermediums mit einer Vielzahl von Filterfalten unterschiedlicher Faltenhöhe, beziehungsweise ergibt sich für diesen Bereich der Faltenhöhe eine optimale Dichte des Filtermediums in Verbindung mit einer maximalen freien Oberfläche des Filtermediums bei geringster elektrostatischer Aufladung.

Es ist weiter vorgesehen, dass durch eine alternierende Reihenfolge von Filterfalten mit einer ersten Faltenhöhe und von Filterfalten mit einer zweiten Faltenhöhe mehr wirksame Filterfläche zur Verfügung steht als bei den bekannten Lösungen mit Filterfalten einer einheitlichen Faltenhöhe. Es ist für einen Durchschnittsfachmann auf dem Gebiet der Filtrationstechnik überraschend, dass sich bei einer solchen Anordnung an Filterfalten und bei entsprechender Fluiddurchströmung mit einem zu filtrierenden Fluid eine insgesamt niedrigere Flächenbelastung für das Filtermedium sowie eine niedrigere Durchtrittsgeschwindigkeit des Fluids bei der Filtration ergibt, was wiederum hilft, die statische Aufladung des Filtermediums im Filterbetrieb deutlich zu reduzieren.

Durch die angesprochene Anordnung von Filterfalten unterschiedlicher Faltenhöhe findet eine Stabilisierung statt, wobei die Filterfalten der zweiten Faltenhöhe die Filterfalten der ersten Faltenhöhe stützen. Mithin ist ein druckstabiler und funktionssicherer Aufbau für das Filtermedium über die Filterfalten unterschiedlicher Höhenausprägung erreicht. Ferner werden die Filterfalten der ersten Faltenhöhe im Betrieb des Filterelementes in ihrer ursprünglichen Anordnung gehalten und weisen dergestalt eine besonders große, der Schmutzseite oder der Reinseite zugewandte, wirksame Filteroberfläche auf. Die der Schmutzseite oder der Reinseite zugewandte offene Oberfläche ist mithin größer als bei herkömmlichen Filterelementen mit einer einheitlichen Faltenhöhe über den gesamten Umfang, die regelmäßig zu dem angesprochenen "Verblocken" neigen. Mithin wird es dem Fluid bei der erfindungsgemäßen Lösung erleichtert, das Filtermedium zu durchdringen, was zu einem Filterelement mit einer über die Lebensdauer verbesserten Filterleistung sowie einer längeren Standzeit führt.

Während in der Filtrationstechnik häufig Anstrengungen unternommen werden, das Filterelement mit seinem Filtermedium dahingehend zu optimieren, dass eine hohe Durchflussleistung nebst einer hohen Abreinigungsleistung erreicht wird, indem man eben möglichst viele einzelne Filterfalten gleicher Einbauhöhe in dem Element verwendet, wird hier ein anderer Weg eingeschlagen, indem man eben auf eine Vielzahl von Einzelfalten gleicher Höhe und mithin auf theoretisch zur Verfügung stehende Filterfläche verzichtet. Durch die Reduzierung der Höhe der Filterfalten mit der zweiten Faltenhöhe hält man die seitlichen Begrenzungsflächen der sich benachbart anschließenden Filterfalten der ersten Filterhöhe für eine Durchströmung frei und erhöht dergestalt die wirksame Filterfläche und somit die Durchfluss- und Abscheideleistung des Filtermediums. Es hat sich gezeigt, dass sich aufgrund der damit einhergehenden, insgesamt niedrigeren Flächenbelastung für das Filtermedium bei vergleichbarer Durchflussleistung gegenüber den bekannten Lösungen eine niedrigere Durchtrittsgeschwindigkeit für das Fluid mit der Folge erreichen lässt, dass elektrostatische Aufladungen erst gar nicht oder zumindest nur in reduzierter Weise entstehen, so dass diese auch nicht über weitere konstruktive Maßnahmen, wie einer Kontaktierungseinrichtung oder einer selektiven Auswahl von Filtermaterialien mit unterschiedlichen Potentialen, beherrscht werden müssen.

Trotz dieser vorteilhaften Eigenschaften kann natürlich auch die erfindungsgemäße Lösung zusätzlich mit einer ableitenden Kontaktierungseinrichtung und/oder mit dem beschriebenen antistatischen Aufbau des Filtermediums entsprechend kombiniert werden, was im Folgenden noch näher dargelegt werden wird.

Besonders bevorzugt weisen die Filterfalten an Übergängen einheitlich große, vorzugsweise gleiche Krümmungsradien auf. Durch die vereinheitlichten Krümmungsradien wird das Filtermaterial beim Formen der Falten geschont. Es kommt nicht zu Brüchen des Filtermaterials, welche die Filtrationsleistung des Filterelements nachteilig beeinträchtigen würden. Auch werden dergestalt scharfkantige Übergänge und Spitzen vermieden, an denen sich elektrische Spannungsspitzen ausbilden können, mit der nachteiligen Folge der elektrischen Spannungsabgabe an das Fluid, insbesondere in Form von Hydraulikflüssigkeit(en).

Weiterhin können gerade oder ebene Abschnitte der Filterfalten jeweils voneinander beabstandet sein. Auf diese Weise ist sichergestellt, dass das auf der Schmutzseite anstehende Fluid über die gesamte Oberfläche des Filtermediums mit einem annähernd einheitlichen Druck ansteht und somit das Filtermedium auf seiner ganzen Oberfläche mit der ungefähr gleichen Flächenbelastung belastet ist. Insbesondere werden dergestalt Turbulenzen beim Durchströmen des Filtermediums vermieden, die ansonsten die elektrostatische Aufladung begünstigen.

Das Filtermedium kann mehrere Lagen Filtervlies oder sonstige filternde Medienlagen aufweisen, wobei die Lagen vorzugsweise unterschiedliche Eiektronenabgabeeigenschaften und/oder Elektronenaufnahmeeigenschaften aufweisen. Bevorzugt gibt eine Filterlage in dem Maß Elektronen ab, wie sie die andere Filterlage aufnimmt, so dass beim Durchströmen des Filtermediums im Wesentlichen elektrisch neutrale Eigenschaften vorliegen.

In axialer Draufsicht auf das Filtermedium und von der Schmutzseite oder der Reinseite aus gesehen bildet die Filterfalte mit der zweiten Faltenhöhe, die von jeweils einer benachbart angeordneten Filterfalte mit der ersten Faltenhöhe begrenzt ist, eine Art ω-Faitenanordnung aus.

Im Folgenden wird das erfindungsgemäße Filterelement anhand eines Ausführungsbeispieles nach der Zeichnung näher erläutert. Dabei zeigen in prinzipieller und nicht maßstäblicher Darstellung:
- Fig. 1: eine stirnseitige Draufsicht auf das erfindungsgemäße Filterelement; und
- Fig. 2: einen Bildausschnitt eines unteren Segmentteiles des Filterelementes gemäß der Fig. 1.

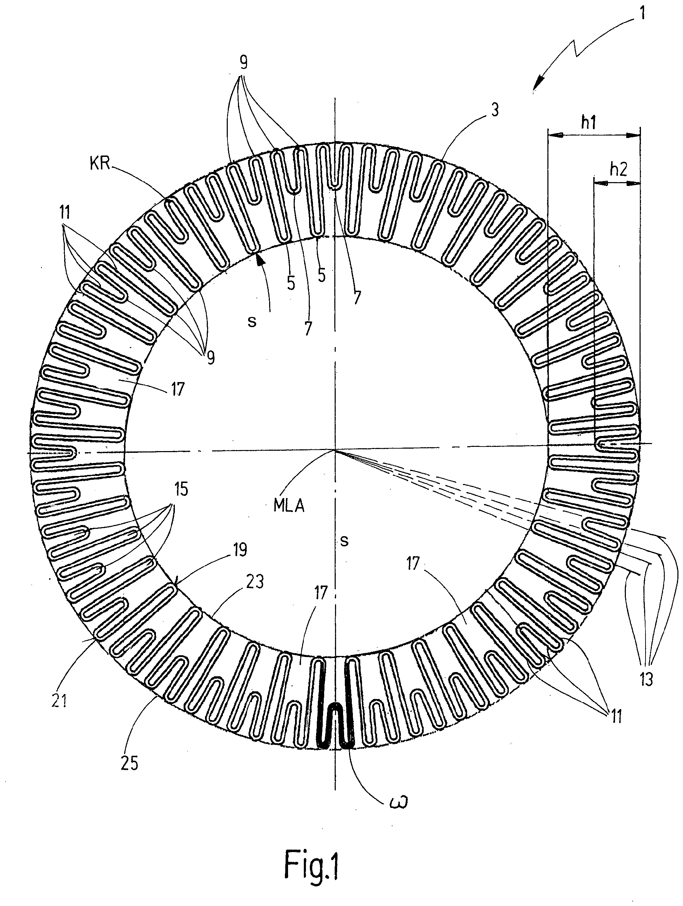

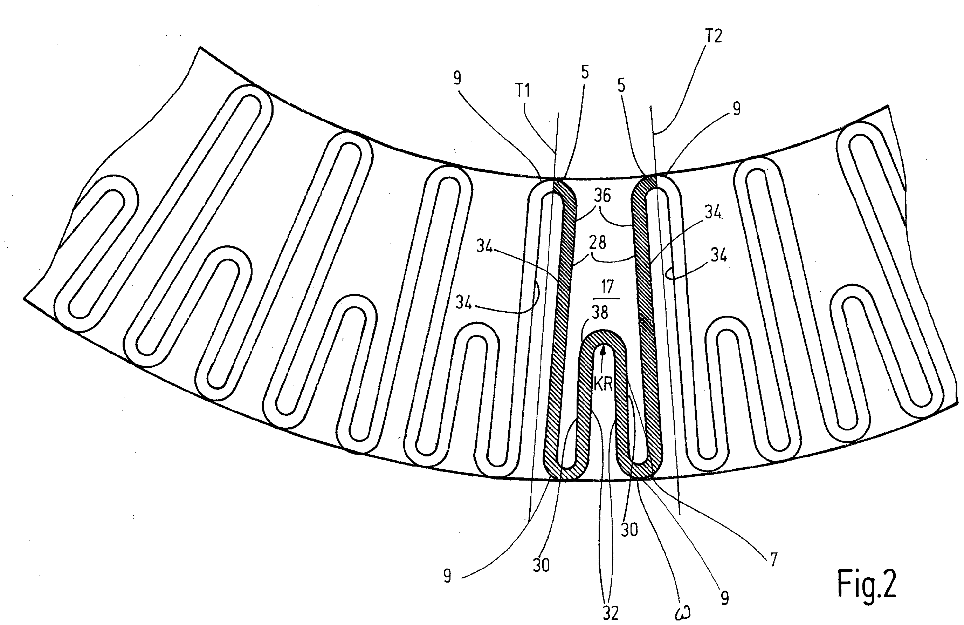

Der Einfachheit halber ist das Filterelement in den Figuren 1 und 2 jeweils nur in einer stirnseitigen Draufsicht ganz bzw. teilweise dargestellt, wobei das Filterelement als solches regelmäßig eine Zylinderform hat, wie dies beispielsweise in den bereits genannten Dokumenten im Stand der Technik DE 10 2004 005 202 A1 und WO 2009/089891 A1 aufgezeigt ist. Insoweit wird, was die Gesamtausgestaltung des Filterelementes anbelangt, auf die dahingehenden Dokumente verwiesen.

Des Weiteren zeigt die Figur 1 ein Filterelement 1 mit einem mehrlagigen Aufbau eines Filtermediums 3. Das Filtermedium 3 weist Filterfalten 5, 7 unterschiedlicher Faltenhöhe h1, h2 auf. Diese haben eine alternierende Reihenfolge von Filterfalten 5 mit einer ersten Faltenhöhe h1 und von Filterfalten 7 mit einer zweiten Faltenhöhe h2. Auf diese Weise steht mehr wirksame Filterfläche zur Verfügung als bei Filterelementen, bei denen die Filterfalten eine einheitliche Faltenhöhe haben. Somit ergibt sich bei Fluiddurchströmung mit einem zu filtrierenden Fluid eine niedrigere Flächenbelastung für das Filtermedium 3 sowie eine niedrigere Durchtrittsgeschwindigkeit des Fluids bei der Filtration. Mithin ist die statische Aufladung des Filtermediums 3 und des gefilterten Fluids im Filterbetrieb reduziert.

Wie man aus der Figur 1 ersehen kann, sind die Filterfalten 5 mit der ersten Faltenhöhe h1 in etwa doppelt so hoch wie die Filterfalten 7 mit der zweiten Faltenhöhe h2, was durch den Stand der Technik (siehe Fig. 2 der EP 0 504 038 A1) bekannt ist. Weiterhin sind die Filterfalten 5, 7 mit Übergängen 9 versehen, die einheitlich große Krümmungsradien KR aufweisen. Die Folge davon ist, dass die geraden bzw. ebenen Abschnitte 11 der Filterfalten 5, 7 jeweils voneinander beabstandet sind. Das gefaltete Filtermedium 3 ist rohrförmig ausgebildet. Die geraden Abschnitte 11 der Filterfalten 5, 7 verlaufen jeweils in einer Ebene 13, in der auch eine Mittellängsachse MLA des Filterelements 1 liegt. Auf diese Weise sind die ebenen Abschnitte 13 der Filterfalten 5, 7 einheitlich voneinander beabstandet. Mithin kann es nicht zu einem Anhaften oder Verkleben der Filterfalten 5, 7 kommen, wodurch die Filterleistung nachteilig beeinflusst würde.

Das Filtermedium 3 weist mehrere Filterlagen, insbesondere aus Filtervlies auf. Diese können sich hinsichtlich ihrer Elektronenabgabe- bzw. -aufnahmeeigenschaften unterscheiden. Auf diese Weise können beispielsweise elektrische Ladungen, die in einer Lage des Filtermediums 3 vom Fluid aufgenommen werden, an eine andere Lage wieder abgegeben werden.

In der axialen Draufsicht auf das Filtermedium 3 und von der Reinseite R aus gesehen bildet die Filterfalte 7 mit der zweiten Faltenhöhe h2, die jeweils von einer benachbart angeordneten Filterfalte 5 mit der ersten Faltenhöhe h1 begrenzt ist, eine Art ω-Fattenanordnung aus. Die einzelnen Filterfalten 5, 7 unterschiedlicher Faltenhöhe h1, h2 sind unter Bildung der ω-Faltenanordnung voneinander beabstandet. Auf diese Weise werden am reinseitig angeordneten Grund 15 des Filtermediums 3 Feinfiltrationsbereiche ausgebildet.

Aufgrund der ω-Fattenanordnung ist zwischen zwei benachbart angeordneten Filterfalten 5 mit der ersten Faltenhöhe h1, die eine Filterfalte 7 mit der zweiten Faltenhöhe h2 begrenzen, ein freier Warteraum 17 für Fluid auf der Schmutzseite S in der Art eines fiktiven Zylindersegments ausgebildet, der im Betrieb des Filterelements 1 zu einer Vergleichmäßigung, sowie bevorzugt zu einer Reduzierung, der Strömungsgeschwindigkeit für das Fluid durch das Filterelement 1 führt.

Schließlich ist aufgrund der ω-Faltenanordnung im Betrieb des Filterelements 1, bei dem dieses im Normalfall von einem Fluid mit Partikelverschmutzung von der Innenseite 19 zur Außenseite 21 durchströmt ist, was zu einer elektrostatischen Aufladung des Filterelements 1 führt, diese Aufladung durch die Reduzierung der Fluidströmungsgeschwindigkeit bedingt durch den jeweiligen Warteraum 17 reduziert.

In der Figur 1 ist das Filterelement 1 zur Innenseite 19 wie zur Außenseite 21 durch fiktive Kreise 23, 25 begrenzt. Die Innenkontur 23 und/oder die Außenkontur 25 des Filterelements 1 können jedoch auch von der Kreisform abweichende Formen aufweisen, insbesondere dreieckige, rechteckige, polygone oder ellipsoide Querschnitte haben. Weiterhin sind auch Gleichdicke bzw. Reuleaux-Dreiecke als innere und/oder äußere Querschnittsformen möglich (nicht dargestellt). Da in Blickrichtung auf die Fig. 1 gesehen das Filterelement 1 von innen nach außen durchströmt wird, kann auf der Außenseite 25 des Filterelementes ein entsprechendes, im Stand der Technik bekanntes und deshalb nicht näher dargestelltes Stützrohr mit einer Perforation als Fluiddurchlass vorhanden sein.

Die Fig. 2 zeigt einen vergrößerten Bildausschnitt eines unteren Kreiszylindersegmentes nach der Fig. 1 mit einer einzelnen, in dunkler Färbung dargestellten ω-Falte. Wie die Fig. 2 verdeutlicht, wird dabei die ω-Falte von den benachbart angrenzenden ω-Falten durch zwei fiktive Trennebenen T1 und T2 begrenzt. Die Gesamtstruktur der ω-Falte ist vergleichmäßigt. Die einander zugewandten inneren Seitenwände 28 der Filterfalten 5 und die äußeren Seitenwänden 30 der mittleren Filterfalte 7, die paarweise an die jeweils zugeordneten Seitenwände 28 angrenzen, nehmen einen Filterfaltenabstand zueinander ein, der im Wesentlichen dem Faltenabstand entspricht, der von den Innenseitenwänden 32 der in der ω-Fattenanordnung mittigen Filterfalte 7 begrenzt ist. Ebenso ist der Faltenabstand zwischen den inneren Seitenwänden 34 einer jeden Filterfalte 5 begrenzt. Somit sind in alternierender Reihenfolge zwischen den Filterfalten 5 und der mittigen Filterfalte 7 eines jeden ω-Faltenverbundes die angesprochenen Faltenabstände gleich, und alle Seitenwände 28, 30, 32 verlaufen nahezu parallel zueinander.

Die benachbart einander zugewandten Seitenwände 36 und 38 der Filterfalten 5, 7 bilden ladungstechnisch gesehen eine Art Plattenkondensator aus, die die Ladungen im freien Fluidmedienstrom entsprechend einsammeln können. Aufgrund der regelmäßigen Anordnung der einzelnen, aneinander angrenzenden ω-Formen im Faltenverbund ist dann eine Vergleichmäßigung des auftretenden Elektropotentials über die gesamte Oberfläche des Filtermaterials erreicht, so dass ein Überspringen von Ladung vermieden wird. Selbst im Fall einer elektrostatischen Aufladung kann es deshalb nicht zu gefährlichen Entladungsblitzen kommen.

Zur Vergleichmäßigung des Ladungstransportes innerhalb des Filtermediums dient auch, dass die Filterfaltenübergänge 9 vergleichmäßigt sind, insbesondere kontinuierlich verlaufende Umlenkbögen ausbilden, die insbesondere im Gegensatz zu einem spitzwinkligen Faltenübergang, wie im Stand der Technik aufgezeigt, keine Stellen mit Spannungsspitzen ausbilden, deren Aufladung über die scharfkantige Faltung an die Hydraulikflüssigkeit schlagartig abgegeben werden könnte.

Die gleichmäßig eingeformten Bogenkonturen realisieren in dem Filtermaterial eine Art Federeigenschaft, die insbesondere bei Druckspitzen im zu filtrierenden Fluid eine Rückstellkraft bewirkt, so dass die Druckspitzen keinen schädigenden Einfluss auf das Medium ausüben können.

Auch wird, wie die Darstellung gemäß der Fig. 2 zeigt, durch die Faltenabstände im unteren Bereich der ω-Falte ein Feinfiltrationsraum geschaffen, der bei Aufnahme von Partikelverschmutzung zusammen mit der mittleren Falte 7 die Aussteifung des jeweiligen ω-Elementes im Faltenverbund erhöht.

In diesem Ausführungsbeispiel ist die Schmutzseite S auf der Innenseite 19 und die Reinseite R auf der Außenseite 21 des Filtermediums 3 vorgesehen. Es versteht sich von selbst, dass die Schmutzseite S auch auf der Außenseite 21 und die Reinseite R auf der Innenseite 19 des Filtermediums 3 vorgesehen sein könnte.

Durch das erfindungsgemäße Filterelement 1 werden elektrostatische Aufladungen einer Hydraulikflüssigkeit beim Durchfluss durch das Filterelement 1 weitgehend vermieden, sodass die Gefahr von ungewollten elektrostatischen Entladungen gebannt ist. Mithin ist das Filterelement 1 auch in Verbindung mit Hydraulikflüssigkeiten geringer elektrischer Leitfähigkeit einsetzbar.

## Patentansprüche

1. Filterelement mit einem, vorzugsweise mehrlagigen, Aufbau eines plissierten Filtermediums (3) mit einer Vielzahl von einzelnen Filterfalten (5, 7), wobei durch eine alternierende Reihenfolge von Filterfalten (5) mit einer ersten Faltenhöhe (h1) und von Filterfalten (7) mit einer zweiten Faltenhöhe (h2) mehr wirksame Filterfläche zur Verfügung steht als bei Filterfalten mit einheitlicher Faltenhöhe, so dass sich bei Fluiddurchströmung mit einem zu filtrierenden Fluid eine insgesamt niedrigere Flächenbelastung für das Filtermedium (3) sowie eine niedrigere Durchtrittsgeschwindigkeit des Fluids bei der Filtration ergibt mit der Folge, dass eine statische Aufladung des Filtermediums (3) im Filterbetrieb reduziert ist, und wobei das gefaltete Filtermedium rohrförmig ausgebildet ist, **dadurch gekennzeichnet, dass** die geraden Abschnitte (11) der Filterfalten (5, 7) jeweils in einer Ebene (13) verlaufen, in der auch eine Mittellängsachse (MLA) des Filtermediums (3) liegt und dass die zweite Faltenhöhe (h2) 85 % bis 95 %, vorzugsweise 90 %, der ersten Faltenhöhe (h1) beträgt.

2. Filterelement nach Anspruch 1, **dadurch gekennzeichnet, dass** die Filterfalten (5, 7) an Übergängen (9) einheitlich große Krümmungsradien (KR) aufweisen.

3. Filterelement nach Anspruch 1 oder 2, **dadurch gekennzeichnet, dass** gerade Abschnitte (11) der Filterfalten (5, 7) jeweils voneinander beabstandet sind.

4. Filterelement nach einem der vorhergehenden Ansprüche, **dadurch gekennzeichnet, dass** das Filtermedium (3) mehrere Lagen Filtervlies aufweist, wobei die Lagen unterschiedliche Elektronenabgabeeigenschaften und/oder Elektronenaufnahmeeigenschaften aufweisen.

5. Filterelement nach einem der vorhergehenden Ansprüche, **dadurch gekennzeichnet, dass** in axialer Draufsicht auf das Filtermedium (3) die Filterfalte (7) mit der zweiten Faltenhöhe (h2), die von jeweils einer benachbart angeordneten Filterfalte (5) mit der ersten Faltenhöhe (h1) begrenzt ist, eine Art ω-Fattenanordnung (ω) ausbildet.

## Claims

1. Filter element with a preferably multilayer structure of a pleated filter medium (3) with a plurality of individual filter pleats (5, 7), wherein, due to an alternating sequence of filter pleats (5) with a first pleat height (h1) and filter pleats (7) with a second pleat height (h2), a more effective filter surface is available than with filter pleats with a uniform pleat height, with the result that, when a fluid to be filtered flows through said filter element, there is a lower surface load overall for the filter medium (3) and a lower passage speed of the fluid during filtration, with the consequence that static loading of the filter medium (3) is reduced during operation of the filter, and wherein the pleated filter medium is designed to be tubular in shape, **characterised in that** the straight portions (11) of the filter pleats (5, 7) each run in a plane (13) in which a middle longitudinal axis (MLA) of the filter medium (3) also lies and **in that** the second pleat height (h2) is 85% to 95%, preferably 90%, of the first pleat height (h1).

2. Filter element according to claim 1, **characterised in that** the filter pleats (5, 7) have the same size radii of curvature (KR) at transitions (9).

3. Filter element according to claim 1 or 2, **characterised in that** straight portions (11) of the filter pleats (5, 7) are each spaced apart from one another.

4. Filter element according to any one of the preceding claims, **characterised in that** the filter medium (3) comprises multiple layers of filter fleece, wherein the layers have different electron discharge properties and/or electron acceptance properties.

5. Filter element according to any one of the preceding claims, **characterised in that**, when the filter medium (3) is viewed axially from above, the filter pleat (7) with the second pleat height (h2), which is bordered by a respective adjacent filter pleat (5) with the first pleat height (h1), forms a sort of 'ω' pleat configuration (ω).

## Revendications

1. Elément de filtre, ayant une structure, de préférence à plusieurs couches, d'un milieu (3) filtrant plissé, ayant une pluralité de plis (5, 7) individuels de filtre, dans lequel, par une succession alternée de plis (5) de filtre d'une première hauteur (h1) et de plis (7) de filtre ayant une deuxième hauteur (h2), une surface de filtre plus efficace est mise à disposition que pour des plis de filtre de même hauteur, de manière à donner, lors d'un passage d'un fluide à filtrer, une charge de surface dans l'ensemble plus petite du milieu (3) filtrant, ainsi qu'une vitesse de passage plus petite du fluide à la filtration, avec la conséquence d'une réduction d'une charge statique du milieu (3) filtrant, lorsque le filtre est en fonctionnement, et dans lequel le milieu filtrant plissé est constitué sous la forme d'un tube, **caractérisé en ce que** les parties (11) droites des plis (5, 7) du filtre s'étendent chacune dans un plan (13), dans lequel se trouve également un axe (MLA) longitudinal médian du milieu (3) filtrant et **en ce que** la deuxième hauteur (h2) des plis représente de 85% à 95%, de préférence 90%, de la première hauteur (h1) des plis.

2. Elément de filtre suivant la revendication 1, **caractérisé en ce que** les plis (5, 7) du filtre ont, aux transitions (9), des rayons (KR) de courbure de même dimension.

3. Elément de filtre suivant la revendication 1 ou 2, caractérisé en que les parties (11) droites des plis (5, 7) du filtre sont à distance les unes des autres.

4. Elément de filtre suivant l'une des revendications précédentes, **caractérisé en ce que** le milieu (3) filtrant a plusieurs couches de non-tissé filtrant, les couches ayant des propriétés d'émission et/ou d'absorbant d'électrons différentes.

5. Elément de filtre suivant l'une des revendications précédentes, **caractérisé en ce que**, dans une vue en plan axial du milieu (3) filtrant, le pli (7) du filtre, ayant la deuxième hauteur (h2), qui est délimité par, respectivement, un pli (5) de filtre voisin ayant la première hauteur (h1), constitue une sorte d'agencement (ω) de plis en ω.
